# EUROPÄISCHE PATENTSCHRIFT

(11) **EP 3 691 071 B1**
(45) Veröffentlichungstag und Bekanntmachung des Hinweises auf die Patenterteilung: **17.03.2021**
(21) Anmeldenummer: 19155283.5
(22) Anmeldetag: 04.02.2019
(51) Int. Cl.: H02J 3/32, H02J 7/34, H02J 1/14

(54) **VERFAHREN ZUM BETRIEB EINER MOBILEN STROMVERSORGUNGSEINRICHTUNG**
METHOD FOR OPERATING A MOBILE POWER SUPPLY
PROCÉDÉ DE FONCTIONNEMENT D'UN DISPOSITIF D'ALIMENTATION ÉLECTRIQUE MOBILE

(43) Veröffentlichungstag der Anmeldung: 05.08.2020
(73) Patentinhaber: Olmatic GmbH, 72160 Horn a. N. (DE)
(72) Erfinder: Olma, Tobias, 72160 Horb a.N. (DE); Olma, Patrick, 72160 Horb a.N. (DE); Olma, Christian, 72160 Horb a.N. (DE)
(74) Vertreter: Späth, Dieter

(56) Entgegenhaltungen:
- JP-A- 2014 131 413
- US-A1- 2007 257 654
- US-A1- 2010 134 077
- US-A1- 2014 285 010

## Beschreibung

Die Erfindung betrifft ein Verfahren zum Betrieb einer insbesondere mobilen Stromversorgungseinrichtung mit den Merkmalen des Oberbegriffs des Anspruchs 1. Mit "Strom" ist hier elektrischer Strom beziehungsweise allgemein elektrische Energie gemeint.

Das Gebrauchsmuster DE 299 14 308 U1 offenbart eine mobile Stromversorgungseinrichtung mit einem Akkumulator als elektrischem Energiespeicher, womit ein Energiespeicher zur Speicherung elektrischer Energie gemeint ist. An die Stromversorgungseinrichtung beziehungsweise an ihren Akkumulator sind Niederspannungs-Gleichstromverbraucher mit einer Nennspannung von 12 Volt oder 24 Volt und Wechselstromverbraucher mit einer Nennspannung von 110 Volt oder 230 Volt bei einer Frequenz von 50 Hertz oder 60 Hertz anschließbar. Zum Anschluss der Stromverbraucher an den Akkumulator weist die bekannte Stromversorgungseinrichtung Spannungswandler und Wechselrichter auf. Zum Laden des Akkumulators sieht die bekannte Stromversorgungseinrichtung regenerative Energiequellen wie Solarmodule, eine Windturbine und eine Wasserturbine vor, zu deren Anschluss die bekannte Stromversorgungseinrichtung Laderegler aufweist. Außerdem ist ein Anschluss an einen Niederspannungs-Gleichstromgenerator und an ein Stromnetz möglich, wofür die Stromversorgungseinrichtung ebenfalls Laderegler aufweist.

Die Patentanmeldung US 2014/0 285 010 A1 offenbart eine Stromversorgungseinrichtung, bei der Stromverbraucher abgeschaltet werden, wenn eine interne Busspannung der Stromversorgungseinrichtung unter eine Abschaltspannung der Stromverbraucher fällt. Stromverbraucher ohne Abschaltspannung werden nicht abgeschaltet sondern belasten die Stromversorgungseinrichtung immer.

Die Patentanmeldung JP 2014-131 413 A offenbart eine Stromversorgungseinrichtung, bei der Stromverbrauchern Prioritäten zugewiesen werden. In der Reihenfolge ihrer Priorität werden die Stromverbraucher betrieben, zu deren Versorgung ausreichend elektrische Energie zur Verfügung steht.

Aufgabe der Erfindung ist, ein Verfahren vorzuschlagen, mit dem verschiedene Verbraucher möglichst lange mit Strom eines elektrischen Energiespeichers und regenerativer elektrischer Energie versorgt werden können.

Gelöst wird diese Aufgabe durch die Merkmale des Anspruchs 1. Als Energiespeicher für elektrische Energie weist die erfindungsgemäße Stromversorgungseinrichtung insbesondere einen oder mehrere Akkumulatoren auf. Zusätzlich oder statt des Akkumulators kann die erfindungsgemäße Stromversorgungseinrichtung einen oder mehrere andere elektrische Energiespeicher wie beispielsweise einen oder mehrere elektrische Kondensatoren aufweisen. Des Weiteren weist die Stromversorgungseinrichtung einen oder mehrere Stromeingänge und einen oder mehrere Stromausgänge mit jeweils einem Spannungswandler zur Anpassung an eine elektrische Spannung des oder der Energiespeicher der Stromversorgungseinrichtung oder zur Anpassung an eine elektrische Nennspannung der Stromversorgungseinrichtung, die eine andere elektrische Spannung als ihr Energiespeicher aufweisen kann, auf. Die Spannungswandler können Gleichspannungswandler, die eine zugeführte Gleichspannung in eine Gleichspannung mit gleichem, höherem, niedrigerem oder invertierten Spannungsniveau wandeln, Wechselspannungswandler, die eine zugeführte Wechselspannung in eine Gleichspannung mit gleichem, höherem, niedrigerem oder invertierten Spannungsniveau wandeln, und/oder Wechselrichter sein, die eine zugeführte Gleichspannung in eine Wechselspannung mit gleichem, höherem oder niedrigerem Spannungsniveau wandeln. Für den elektrischen Energiespeicher kann die Stromversorgungseinrichtung einen Laderegler aufweisen. Der Laderegler des oder der Energiespeicher ist insbesondere steuerbar, d. h. der Laderegler ist mit einer noch zu erläuternden, programmierbaren Steuerung abschaltbar, so dass der oder die Energiespeicher von den Stromeingängen und den Stromausgängen getrennt werden kann und/oder drosselbar, so dass ein Ladestrom und/oder ein Entladestrom des oder der Energiespeicher verringert, gesteuert oder geregelt werden kann. Der oder die Energiespeicher können geladen werden, während an die Stromausgänge angeschlossene Stromverbraucher betrieben, d. h. mit Strom versorgt werden.

Die Stromversorgungseinrichtung ist vorzugsweise, allerdings nicht zwingend mobil, sie kann auch stationär sein.

Die Stromeingänge sind zum Anschluss an vorzugsweise regenerative Energiequellen wie insbesondere ein oder mehrere Solarmodule, eine oder mehrere Windturbinen und - sofern verfügbar - eine oder mehrere Wasserturbinen vorgesehen. Ergänzend - insbesondere für den Fall, dass der Strom beziehungsweise die elektrische Energie der regenerativen Stromquellen nicht zum Betrieb angeschlossener Stromverbraucher ausreicht - können Stromeingänge für konventionelle Stromquellen wie insbesondere ein Stromerzeugungsaggregat und/oder ein elektrisches Stromnetz vorhanden sein.

Die Stromausgänge sind zum Anschluss grundsätzlich beliebiger Gleichstrom- und/oder Wechselstrom-Niederspannungs- und/oder -Hochspannungsstromverbraucher vorgesehen.

Erfindungsgemäß weist die Stromversorgungseinrichtung eine programmierbare Steuerung auf, die die Spannungswandler der Stromausgänge und des oder der Energiespeicher beziehungsweise die Ladung des oder der Energiespeicher nach vorgebbaren, nämlich programmierbaren Kriterien steuert. Durch Programmierung sind die Kriterien änderbar und an die jeweilige Verwendung der Stromversorgungseinrichtung anpassbar. Den Stromausgängen werden Prioritäten zugewiesen, beispielsweise können ein oder mehrere Stromausgänge als unverzichtbar und ein oder mehrere andere Stromausgänge als vorrangig, nachrangig und/oder als verzichtbar festgelegt werden. Auch können Stromausgänge als drosselbar festgelegt werden. Genügen der elektrische Strom, der an den Stromeingängen verfügbar ist und die im elektrischen Energiespeicher gespeicherte elektrische Energie nicht zur Versorgung der an die Stromausgänge angeschlossenen Stromverbraucher, werden erfindungsgemäß verzichtbare Stromausgänge und/oder Stromausgänge mit niedriger Priorität abgeschaltet und/oder drosselbare Stromausgänge gedrosselt. Die Abschaltung und/oder Drosselung erfolgt insbesondere durch Steuerung der den Stromausgängen zugeordneten Spannungswandler mit der programmierbaren Steuerung der erfindungsgemäßen Stromversorgungseinrichtung. Stromausgänge mit niedrigerer Priorität werden vor Stromausgänge mit höherer Priorität abgeschaltet oder gedrosselt.

Wie die Stromausgänge können bei Ausgestaltungen der Erfindung auch den Stromeingängen Prioritäten, Ränge oder Kriterien zugewiesen, nach denen sie angeschaltet, abgeschaltet und/oder gedrosselt werden. Auch auf der Eingangsseite werden die Stromeingänge insbesondere durch Steuerung ihrer Spannungswandler durch Steuerung mit der programmierbaren Steuerung angeschaltet, abgeschaltet und/oder gedrosselt. Die Steuerung erfolgt nach vorgebbaren, nämlich programmierbaren Kriterien, die durch Umprogrammierung oder Neuprogrammierung änder bar und an die jeweilige Verwendung der Stromversorgungseinrichtung anpassbar sind. Beispielsweise können Stromeingänge für alternative Stromquellen als vorrangig und/oder Stromeingänge für konventionelle Stromquellen als nachrangig festgelegt werden, so dass der Betrieb der Stromverbraucher und/oder die Ladung des oder der Energiespeicher möglichst ausschließlich beziehungsweise so weit wie möglich mit alternativen Energiequellen erfolgt. Es kann auch innerhalb der Stromeingänge für alternative Stromquellen und/oder innerhalb der Stromeingänge für konventionelle Stromquellen eine Rangfolge festgelegt werden, so dass beispielsweise Strom aus einer Stromquelle, die als besonders umweltschädigend eingestuft wird, nur verwendet wird, wenn es sich nicht vermeiden lässt.

Wie weiter oben ausgeführt kann auch der Ladestrom des oder der Energiespeicher mit dessen Laderegler gedrosselt werden.

Erfindungsgemäß möglich ist insbesondere auch eine Abschaltung und/oder Drosselung von Stromausgängen der Stromversorgungseinrichtung in Abhängigkeit von einem Ladezustand des oder der Energiespeicher. Beispielsweise werden mit zunehmender Entladung des Energiespeichers oder auch zum Laden des Energiespeichers verzichtbare Stromausgänge und Stromausgänge mit niedriger Priorität gedrosselt oder abgeschaltet. Mit zunehmender Entladung des oder der Energiespeicher können nacheinander weitere Stromausgänge mit höheren Prioritäten abgeschaltet und/oder gedrosselt werden, so dass unverzichtbare Stromverbraucher möglichst ohne Unterbrechung und Stromverbraucher mit hohen Prioritäten möglichst lange mit elektrischem Strom versorgt werden.

Ein Vorteil der Erfindung ist, dass sie bei optimaler Auslegung eine vollständig oder jedenfalls weitgehend autarke Stromversorgung aus vorzugsweise alternativen (regenerativen) Stromquellen und/oder weitgehend oder vollständig unabhängig von Netzstrom und/oder konventionellen Energiequellen ermöglicht. Vorzugweise ist die Stromversorgungseinrichtung mobil, eine stationäre Stromversorgungseinrichtung ist allerdings ebenfalls möglich.

Eine Ausgestaltung der Erfindung sieht vor, dass festgelegte Stromeingänge nur eingeschaltet werden, wenn der Strom, der an anderen Stromeingängen der Stromversorgungseinrichtung zur Verfügung steht, nicht zur Versorgung aller oder eines Teils der Stromverbraucher und ggf. zum Laden des oder der Energiespeicher der Stromversorgungseinrichtung ausreicht. Hierfür werden insbesondere die Stromeingänge ausgewählt, die an konventionelle Energiequellen angeschlossen oder zum Anschluss an konventionelle Energiequellen vorgesehen sind. Auf diese Weise lässt sich der oder lassen sich die Energiespeicher vorzugsweise aus regenerativen Energiequellen laden und angeschlossenen Stromverbraucher mit regenerativer Energie betreiben. Die festgelegten Stromeingänge können auch eingeschaltet werden, wenn absehbar ist, dass der Strom regenerativer Energiequellen, an die die Stromeingänge der Stromversorgungseinrichtung angeschlossen sind, und/oder die in dem oder den Energiespeicher der Stromversorgungseinrichtung gespeicherte elektrische Energie nicht für eine ausreichende Zeit zum Betrieb der an die Stromversorgungseinrichtung angeschlossenen Stromverbraucher ausreichen wird. Auch hier können die Prioritäten der Stromverbraucher berücksichtigt werden und verzichtbare Stromverbraucher und/oder Stromverbraucher mit niedrigeren Prioritäten gedrosselt und/oder abgeschaltet werden oder das Drosseln und/oder Abschalten eingeplant werden, um auf eine Stromversorgung mit konventionellen Energiequellen nach Möglichkeit verzichten zu können.

Möglich ist auch ein Einschalten der festgelegten Stromeingänge für insbesondere konventionelle Energiequellen abhängig von einem Ladezustand des oder der Energiespeicher. Beispielsweise kann der oder können die Energiespeicher der Stromversorgungseinrichtung mit Strom aus konventionellen Energiequellen geladen werden, wenn der oder die Energiespeicher unter einen festlegbaren Minimalwert entladen werden beziehungsweise sind.

Auch dem oder den Energiespeicher/n können erfindungsgemäß von ihren Ladezuständen abhängige Prioritäten zugewiesen werden, so dass beispielsweise mit zunehmender Entladung des oder der Energiespeicher deren Ladung steigende Prioritäten zugewiesen werden, was bedeutet, dass Stromverbraucher gedrosselt oder abgeschaltet werden um den oder die Energiespeicher zu laden, ihren Ladezustand zu erhalten oder ihre Entladung zu verlangsamen.

Eine Ausgestaltung der Erfindung sieht eine wasserdichte Stromversorgungseinrichtung und/oder Unterwasserstecker für die Stromeingänge und die Stromausgänge vor. Die Stromversorgungseinrichtung kann absolut wasserdicht sein, um sie unter Wasser betreiben zu können. Möglich ist auch eine Dichtigkeit gegen Spritzwasser, das mit verschiedenen Geschwindigkeiten aus unterschiedlichen Richtungen auf die Stromversorgungseinrichtung trifft. Auch eine Dichtigkeit der Stromversorgungseinrichtung gegen Staub und/oder Verschmutzung nach unterschiedlichen Kriterien ist möglich. Mit Unterwasserstecker sind elektrische Steckverbinder gemeint, die wasserdicht sind und - wenn sie über Wasser eingesteckt werden - unter Wasser betrieben oder die unter Wasser eingesteckt, betrieben und ausgesteckt werden können.

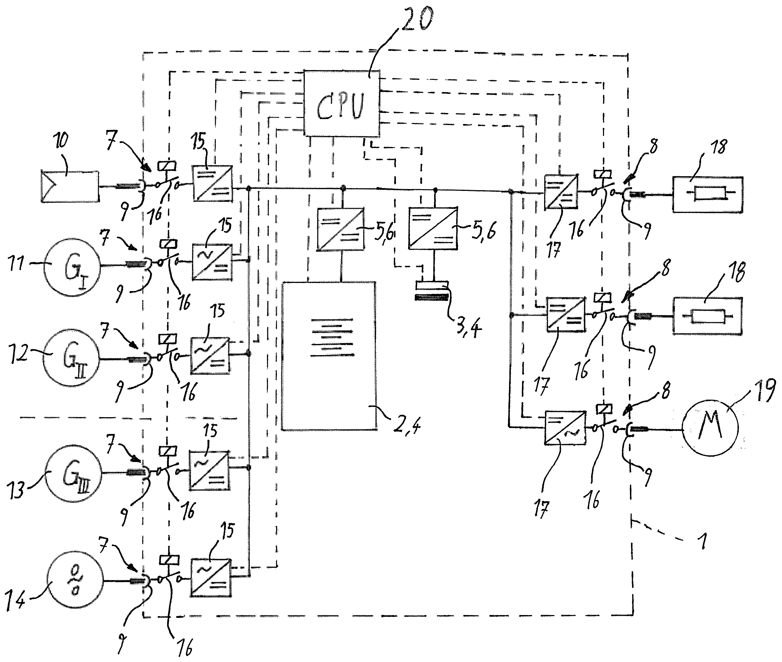

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten elektrischen Schaltbilds erläutert.

Die erfindungsgemäße Stromversorgungseinrichtung 1, deren Schaltbild in der Zeichnung dargestellt ist, weist einen Akkumulator 2 und zusätzlich einen elektrischen Kondensator 3 als elektrische Energiespeicher 4 zur Speicherung elektrischer Energie auf. Die Stromversorgungseinrichtung 1 kann auch mehrere Akkumulatoren 2 und/oder mehrere Kondensatoren 3 oder auch nur einen Akkumulator 2 oder nur einen Kondensator 3 als elektrischen Energiespeicher 4 aufweisen. Andere elektrische Energiespeicher als Akkumulatoren oder Kondensatoren sind möglich. Der Akkumulator 2 und der Kondensator 3 und allgemein jeder elektrische Energiespeicher 4 weist einen Ladestromregler 5 auf, die allgemein auch als Spannungswandler 6 aufgefasst werden können.

Die Stromversorgungseinrichtung 1 weist mehrere Stromeingänge 7 und Stromausgänge 8 auf. Jeder Stromeingang 7 und jeder Stromausgang 8 weist eine elektrische Steckeinrichtung 9, insbesondere eine elektrische Steckerkupplung oder einen elektrischen Stecker zum Anschluss jeweils einer elektrischen Energiequelle oder eines Stromverbrauchers auf. Vorzugsweise sind die Steckeinrichtungen 9 Unterwasserstecker, die unter Wasser betrieben werden können, wenn sie über Wasser eingesteckt worden sind, oder die unter Wasser eingesteckt, betrieben und ausgesteckt werden können.

Im Ausführungsbeispiel der Erfindung sind Stromeingänge 7 für regenerative elektrische Energiequellen, nämlich für ein Solarmodul 10, eine Windturbine 11 und eine Wasserturbine 12 vorgesehen. Weitere Stromeingänge 7 für konventionelle Energiequellen, beispielsweise für ein Stromerzeugungsaggregat 13 (Notstromaggregat) oder ein öffentliches Stromnetz 14 können vorhanden sein. Jeder Stromeingang 7 weist einen Spannungswandler 15 auf, bei denen es sich um Gleich- oder Wechselspannungswandler handelt, die für die jeweils zum Anschluss vorgesehene Stromquelle vorgesehen sind und deren Gleich- oder Wechselspannung in eine Gleichspannung der Stromversorgungseinrichtung 1 wandeln. An die Spannungswandler 15 der Stromeingänge 7 sind die Ladestromregler 5 der elektrischen Energiespeicher 4 der Stromversorgungseinrichtung 1 angeschlossen. Der Spannungswandler 15 für das Solarmodul 10 kann auch als Solarladeregler aufgefasst werden.

Zwischen jedem Stromeingang 7 und dem zugeordneten Spannungswandler 15 weist die Stromversorgungseinrichtung 1 elektrische Schalter 16 auf, durch die die Stromeingänge 7 elektrisch von den Spannungswandlern 15 trennbar sind. Das Schaltbild zeigt mit Elektromagneten betätigbare Schalter 16. Möglich sind allerdings auch elektronische Schaltelemente, beispielsweise Thyristoren, als Schalter 16. Insbesondere weisen die Stromeingänge 7 elektromechanische Schütze oder Halbleiterschütze als Schalter auf, mit denen alle Leitungen des jeweiligen Stromeingangs 7 vom zugeordneten Spannungswandler 15 trennbar sind, also stromführende Leiter (Außenleiter, Neutralleiter) ebenso wie stromlose Leiter (Schutzleiter). Dadurch sind die Stromeingänge 7 galvanisch von den zugeordneten Spannungswandlern 15 trennbar.

Die Stromausgänge 8 weisen ebenfalls Spannungswandler 17 auf, mit denen sie an die Spannungswandler 15 der Stromeingänge 7 und an die Ladestromregler 5 der elektrischen Energiespeicher 4 angeschlossen sind. Die Stromausgänge 8 sind zum Anschluss von Niederspannungs- und/oder Hochspannungs-Stromverbrauchern 18, 19 und/oder zum Anschluss von Gleichspannungs- und/oder Wechselspannungs-Stromverbrauchern 18, 19 vorgesehen. In der Zeichnung sind Niederspannungs-Gleichstromverbraucher 18 und ein Hochspannungs-Wechselstromverbraucher/Netzspannungsverbraucher 19 dargestellt, wobei die Erfindung nicht auf die gezeichnete Kombination beschränkt ist. Die Stromausgänge 8 weisen Gleichspannungswandler und ggf. Wechselrichter auf, deren Stromart (Gleich- oder Wechselstrom) und Spannung an den jeweils zum Anschluss vorgesehenen Stromverbraucher 18, 19 angepasst ist bzw. mit einer programmierbaren Steuerung 20 anpassbar ist. Die Gleichspannungswandler und/oder Wechselrichter werden hier allgemein als Spannungswandler 17 bezeichnet.

Wie die Stromeingänge 7 weisen die Stromausgänge 8 Steckeinrichtungen 9 mit Unterwassersteckern und zwischen den Spannungswandlern 17 und den Steckeinrichtungen 9 und den Spannungswandlern 17 angeordnete elektrische Schalter 16 auf, mit denen sich die Stromausgänge 8 galvanisch von den zugeordneten Spannungswandlern 17 trennen lassen. Wie an den Stromeingängen 7 sind die Schalter 16 der Stromausgänge 8 insbesondere elektromechanische Schütze oder Halbleiterschütze, wobei andere Schalter 16, beispielsweise elektromagnetisch betätigbare Schalter 16 oder elektronische Schaltelemente wie Thyristoren ebenfalls als Schalter 16 verwendbar sind.

Die Spannungswandler 15, 17 der Stromeingänge 7 und Stromausgänge 8 und die Ladestromregler 5 der elektrischen Energiespeicher 4 sind steuerbar.

Außerdem weist die erfindungsgemäße Stromversorgungseinrichtung 1 eine programmierbare elektronische Steuerung 20 zum Steuern der Ladestromregler 5 beziehungsweise Spannungswandler 6 des oder der elektrischen Energiespeicher 4, zum Steuern der Spannungswandler 15,17 der Stromeingänge 7 und der Stromausgänge 8 und zum Steuern der Schalter 16 der Stromeingänge 7 und der Stromausgänge 8 auf. Die elektronische Steuerung 20 kann auch als Prozessor oder als elektronisches Steuergerät aufgefasst werden und einen Einchip-Mikrocontroller oder einen Einplatinencomputer aufweisen. Auch aufwändigere Computer oder dergleichen sind als programmierbare, elektronische Steuerung 20 möglich.

Durch eine Programmierung der Steuerung 20 werden den Stromausgängen 8 Prioritäten zugewiesen. Es können Stromausgänge 8 als unverzichtbar und/oder als drosselbar gekennzeichnet werden. Genügt der Strom, den die regenerativen Stromquellen 10, 11, 12 liefern und/oder die im Energiespeicher 4 gespeicherte elektrische Energie nicht für den Betrieb aller an die Stromversorgungseinrichtung 1 angeschlossenen Stromverbraucher 18, werden zunächst die Stromausgänge 8 mit der niedrigsten Priorität abgeschaltet und/oder drosselbare Stromausgänge 8 gedrosselt. Das Abschalten kann mit den Spannungswandlern 17 und/oder den Schaltern 16 und das Drosseln mit den Spannungswandlern 17 erfolgen. Reicht der Strom immer noch nicht für die verbliebenen Stromverbraucher 18 aus, werden weitere Stromausgänge 8 mit niedriger Priorität abgeschaltet.

Stromausgänge 8 können auch dann gedrosselt oder abgeschaltet werden, wenn die in den elektrischen Energiespeichern 4 gespeicherte Energie unter einen durch Programmierung der Steuerung 20 veränderlich festgelegten Minimalwert sinkt oder die Stromversorgung von Stromverbrauchern 18 mit hoher Priorität nur noch eine begrenzte Zeit gewährleistet ist, die ebenfalls durch Programmierung der Steuerung 20 veränderlich festlegbar ist.

Ebenfalls kann festgelegt werden, dass Stromeingänge 7, die insbesondere zum Anschluss konventioneller Stromquellen 13, 14 vorgesehen sind, nur eingeschaltet werden, wenn die in den elektrischen Energiespeichern 4 gespeicherte Energie unter einen veränderlich festgelegten Minimalwert sinkt, damit die Stromverbraucher 18 vorzugsweise mit regenerativ erzeugtem Strom versorgt werden.

Eine Priorisierung und Drosselung der Stromeingänge 7 ist ebenso möglich wie bei den Stromausgängen 8 und erfolgt durch entsprechende Steuerung der Spannungswandler 15 der Stromeingänge 7 mit der programmierbaren Steuerung 20.

Erfindungsgemäß können auch den elektrischen Energiespeichern 4 Prioritäten zugewiesen werden, so dass die elektrischen Energiespeicher 4 mit hoher Priorität bevorzugt geladen werden. Der Ladestrom elektrischer Energiespeicher 4 mit niedriger Priorität kann gedrosselt oder abgeschaltet werden. Auch ist es möglich, ein Verhältnis der Ladeströme verschiedener elektrischer Energiespeicher 4 zu steuern oder zu regeln, wobei sich das Ladestromverhältnis der verschiedenen Energiespeicher 4 während des Ladens ändern kann abhängig beispielsweise vom Ladezustand der Energiespeicher 4, der verfügbaren elektrischen Energie an den Stromeingängen 7, die sich während des Ladens der Energiespeicher 4 ändern kann, und/oder dem elektrischen Energiebedarf der an die Stromausgänge 8 angeschlossenen Stromverbraucher 18, 19, der sich ebenfalls während des Ladens der Energiespeicher 4 ändern kann. Die Priorität der Energiespeicher 4 kann von ihrem Ladezustand abhängig gemacht werden, das heißt die Priorität der Energiespeicher 4 steigt mit deren Entladung. Um die Energiespeicher 4 zu laden, können Stromausgänge 8 abgeschaltet oder gedrosselt werden.

Durch Um- oder Neuprogrammierung der Steuerung 20 lässt sich die Stromversorgungseinrichtung 1 beliebig an die angeschlossenen Stromquellen 10, 11, 12, 13, 14, Stromverbraucher 18 und elektrischen Energiespeicher 4 anpassen und jederzeit ändern.

## Patentansprüche

1. Verfahren zum Betrieb einer Stromversorgungseinrichtung (1), die einen oder mehrere elektrische Energiespeicher (4), insbesondere einen oder mehrere Akkumulatoren (2), Stromeingänge (7) mit Spannungswandlern (15), Stromausgänge (8) mit Spannungswandlern (17) und eine programmierbare Steuerung (20) aufweist, die die Spannungswandler (15, 17) steuert, wobei den Stromausgängen (8) Prioritäten zugewiesen werden und dass Stromausgänge (8) mit niedriger Priorität abgeschaltet oder gedrosselt werden, wenn die Stromeingänge (7) und/oder der Energiespeicher (4) nicht genügend Strom zur Versorgung aller Stromausgänge (8) liefern und **dadurch gekennzeichnet, dass** festgelegte Stromeingänge (7) nur eingeschaltet werden, wenn der Strom der anderen Stromeingänge (7) und/oder des elektrischen Energiespeichers (4) nicht zur Versorgung der Stromausgänge (8), die nicht abgeschaltet werden sollen, und gedrosselter Stromausgänge (8), die nicht weiter gedrosselt werden sollen, ausreicht.

2. Verfahren nach Anspruch 1, **dadurch gekennzeichnet, dass** den Stromeingängen (7) Prioritäten zugewiesen werden und dass Stromeingänge (7) mit hoher Priorität vorzugsweise angeschaltet und/oder Stromeingänge (7) mit niedriger Priorität entsprechend ihrer Rangfolge abgeschaltet oder gedrosselt und abhängig von einem variabel festlegbaren Ladestrom des/der Energiespeicher (4) und/oder vom Strombedarf von Stromverbrauchern (18, 19), die an die Stromausgänge (8) angeschlossen sind, angeschaltet werden.

3. Verfahren nach Anspruch 2, **dadurch gekennzeichnet, dass** die festgelegten Stromeingänge (7) nur eingeschaltet werden, wenn der Energiespeicher (4) unter einen festlegbaren Minimalwert entladen ist/wird.

4. Verfahren nach einem oder mehreren der Ansprüche 1 bis 3, **dadurch gekennzeichnet, dass** dem Energiespeicher (4) eine von seinem Ladezustand abhängige Priorität zugewiesen wird.

5. Verfahren nach einem oder mehreren der vorhergehenden Ansprüche, **dadurch gekennzeichnet, dass** der Energiespeicher (4) einen Ladestromregler (5) aufweist, der von der Steuerung (20) gesteuert wird.

6. Verfahren nach Anspruch 5, **dadurch gekennzeichnet, dass** ein Ladestrom des Energiespeichers (4)/Ladeströme der Energiespeicher (4) durch Steuerung des/der zugeordneten Ladestromreglers (5) mit der programmierbaren Steuerung (20) steuerbar oder regelbar ist.

7. Verfahren nach einem oder mehreren der vorhergehenden Ansprüche, **dadurch gekennzeichnet, dass** die Stromversorgungseinrichtung (1) wasserdicht ist.

8. Verfahren nach Anspruch 7, **dadurch gekennzeichnet, dass** die Stromversorgungseinrichtung (1) Unterwasserstecker aufweist.

## Claims

1. Method for operating a power supply device (1), comprising one or more electrical energy stores (4), in particular one or more rechargeable batteries (2), power inputs (7) comprising voltage transformers (15), power outputs (8) comprising voltage transformers (17) and a programmable controller (20) controlling the voltage transformers (15, 17), wherein priorities are assigned to the power outputs (8) and low-priority power outputs (8) are deactivated or throttled when the power inputs (7) and/or the energy stores (4) do not provide sufficient power to supply all the power outputs (8), **characterized in that** established power inputs (7) are only activated when the power of the other power inputs (7) and/or of the electrical energy store (4) is not sufficient to supply the power outputs (8) that are not to be deactivated, and throttled power outputs (8) that cannot be throttled further.

2. Method according to claim 1, **characterized in that** priorities are assigned to the power inputs (7) and that high-priority power inputs (7) are preferably activated and/or low-priority power inputs (7) are deactivated or throttled according to the ranking thereof and are activated as a function of a variably establishable charging current of the energy store or stores (4) and/or of the power demand of power loads (18, 19) connected to the power outputs (8).

3. Method according to claim 2, **characterized in that** the established power inputs (7) are only activated when the energy store (4) has been/will be discharged below an establishable minimum value.

4. Method according to one or more of claims 1 to 3, **characterized in that** a priority is assigned to the energy store (4), which is dependent on the charge state thereof.

5. Method according to one or more of the preceding claims, **characterized in that** the energy store (4) comprises a charging current controller (5), which is controlled by the controller (20).

6. Method according to claim 5, **characterized in that** a charging current of the energy store (4)/charging currents of the energy stores (4) can be controlled or regulated by controlling the assigned charging current controller or controllers (5) by way of the programmable controller (20).

7. Method according to one or more of the preceding claims, **characterized in that** the power supply device (1) is waterproof.

8. Method according to claim 7, **characterized in that** the power supply device (1) comprises underwater connectors.

## Revendications

1. Procédé pour faire fonctionner un dispositif d'alimentation électrique (1), lequel possède un ou plusieurs accumulateurs d'énergie électrique (4), notamment une ou plusieurs batteries (2), des entrées de courant (7) comprenant des convertisseurs de tension (15), des sorties de courant (8) comprenant des convertisseurs de tension (17) et une commande programmable (20) qui commande les convertisseurs de tension (15, 17), des priorités étant attribuées aux sorties de courant (8) et en ce que les sorties de courant (8) ayant la priorité la plus basse sont mises hors circuit ou réduites en puissance lorsque les entrées de courant (7) et/ou l'accumulateur d'énergie (4) ne délivrent pas suffisamment de courant pour l'alimentation de toutes les sorties de courant (8) et **caractérisé en ce que** les entrées de courant (7) spécifiées ne sont mises en circuit que lorsque le courant des autres entrées de courant (7) et/ou de l'accumulateur d'énergie (4) électrique ne suffit pas pour l'alimentation des sorties de courant (8) qui ne doivent pas être mises hors circuit et des sorties de courant (8) réduites en puissance dont la réduction de puissance ne doit pas se poursuivre.

2. Procédé selon la revendication 1, **caractérisé en ce que** des priorités sont attribuées aux entrées de courant (7) et **en ce que** les entrées de courant (7) ayant la priorité la plus élevée sont mises en circuit de préférence et/ou les entrées de courant (7) ayant la priorité la plus basse sont mises hors circuit ou réduites en puissance conformément à leur ordre prioritaire et sont mises en circuit en fonction d'un courant de charge pouvant être spécifié de manière variable du/des accumulateurs d'énergie (4) et/ou de la consommation de courant des récepteurs de courant (18, 19) qui sont raccordés aux sorties de courant (8).

3. Procédé selon la revendication 2, **caractérisé en ce que** les entrées de courant (7) spécifiées ne sont mises en circuit que lorsque l'accumulateur d'énergie (4) est/devient déchargé au-dessous d'une valeur minimale pouvant être spécifiée.

4. Procédé selon l'une des revendications 1 à 3, **caractérisé en ce qu'**une priorité dépendante de sa durée de vie est attribuée à l'accumulateur d'énergie (4) .

5. Procédé selon l'une ou plusieurs des revendications précédentes, **caractérisé en ce que** l'accumulateur d'énergie (4) possède un régulateur de courant de charge (5) qui est commandé par la commande (20) .

6. Procédé selon la revendication 5, **caractérisé en ce que** le courant de charge de l'accumulateur d'énergie (4) / les courants de charge des accumulateurs d'énergie (4) peuvent être commandés ou régulés par la commande du/des régulateur(s) de courant de charge (5) associé(s) avec la commande programmable (20).

7. Procédé selon l'une ou plusieurs des revendications précédentes, **caractérisé en ce que** le dispositif d'alimentation électrique (1) est étanche.

8. Procédé selon la revendication 7, **caractérisé en ce que** le dispositif d'alimentation électrique (1) possède une fiche submersible.
